# EUROPEAN PATENT SPECIFICATION

(11) **EP 2 642 842 B1**
(45) Date of publication and mention of the grant of the patent: **12.10.2016**
(21) Application number: 11843147.7
(22) Date of filing: 22.11.2011
(51) Int. Cl.: A01B 23/06, A01B 15/16

(54) **BLADE MOUNT**
KLINGENHALTER
SUPPORT DE LAME

(30) Priority: 23.11.2010 NZ 58945810
(43) Date of publication of application: 02.10.2013
(73) Proprietor: Baker, Christopher John, Christchurch 8140 (NZ)
(72) Inventor: RITCHIE, William, Rowlan, Christchurch 8140 (NZ); ROBINSON, David, John, Christchurch 8140 (NZ); SEFTON, Brian, William, Christchurch 8140 (NZ)
(74) Representative: Thurston, Joanna
(86) International application number: PCT/NZ2011/000245
(87) International publication number: WO 2012/070957

(56) References cited:
- EP-A1- 2 227 930
- EP-A1- 2 227 930
- CA-A1- 2 618 298
- GB-A- 763 033
- US-B1- 6 237 696
- US-B1- 6 237 696

## Description

### TECHNICAL FIELD

The present invention relates to a mounting assembly for a blade of a soil engaging apparatus. In particular it relates to an improved mounting assembly for a blade of a no-tillage seed sowing apparatus.

### BACKGROUND ART

Apparatus for sowing seeds into untilled soils (ie, not previously ploughed or disturbed and usually covered by plant residues) in which the seed is deposited into a slit formed in the ground by a disc drawn through the ground, have been generally described in various patents including: US Pat. No. 4,275,671 (to Baker CJ); US Pat. No. 5,269,237 to (Baker CJ et al.); and US Pat. No 6, 644,226 (to Baker CJ et al.).

One feature of the apparatus described in the above patents is the use of one or more side blades that are arranged so that they contact a lateral face (or in the case of two or more blades, at least one contacting a face on one side and the other(s) on the other side) of a flat circular disc. The disc is mounted on an axle so that, in use, the disc rotates in a vertical plane about a horizontal axis (the axis of the axle) while partly embedded in the soil, and is drawn in a forward direction with its axle substantially parallel to the soil surface and perpendicular to the direction of travel.

References here and throughout the specification to vertical and horizontal planes are used as an aid to description only and are not intended to suggest that the planes are strictly or always vertical or horizontal respectively. The terms relate to orientations of the apparatus when placed on level ground. It is appreciated, for example, that the plane of the disc when forming a slot across an incline will be orthogonal to the ground and therefore at an angle to the vertical. During normal operations the disc may also flex a limited amount from the vertical plane and in so doing may vary its orientation from the vertical plane for a short time.

Each side blade has a leading edge which is typically straight in the vertical-longitudinal plane (ie the plane of the surface of the disc) and has an inclined curvilinear outer surface to deflect material away from the disc. Each blade is mounted such that it contacts the disc face substantially throughout the entire length of the leading edge when at rest (i:e. with the disc out of the ground).

As the combination advances through the soil the blade is held against the disc by a combination of self-adjusting lateral soil forces and a fixed pre-load exerted on the blade(s) by a spring device located near the top of each blade. Intimate contact between the leading edge of the blade and the surface of the disc is essential to the proper function of the device in not only passing through soil but also to deflect surface residues, straw and soil away from the blades and disc. The existence of such plant residues are an essential ingredient of the practice of seeding into untilled soils as they protect the soil from erosion and moisture loss. This practice is variously known as "no-tillage", "no-till", "zero tillage", "conservation tillage" or "direct drilling".

If a gap does form between the leading edge of the blade and the surface of the disc soil and/or plant residues can accumulate in the gap and severely reduce the efficiency of the seeding apparatus. When this occurs it is necessary to stop the apparatus for maintenance (clearing the blockage or in extreme cases replacing the disc/blade) which is costly and inconvenient.

In practice there can be problems with holding the blade against the disc during use. This can arise due to wear of the leading edge of the blade opening a gap between it and the disc surface, or by an inability of the blade to follow the disc as they are subjected to a wide variety of forces as they move through the soil, among other causes due to general wear and tear arising from use in a rugged environment.

In some instances the problem may be alleviated by use of abrasion-resistant precision tooling of the blade (especially the leading edge) and the disc surface.

The blade is formed so that the inner surface towards the rear of each blade is sufficiently clear of the disc to allow the passage of granular or particulate objects such as seeds, fertiliser and/or dry pesticides to pass in a controlled manner down the gap between the inner surface of the blade and the flat surface of the disc into the soil. The blade is also angled forward at its top so as to ensure that these particulate materials remain within the blade confines while falling into the soil under gravitational force and/or with the assistance of a controlled air steam, for example from a fan, blowing down the delivery tubes.

The above arrangement allows almost identical right and left handed blades to be positioned on opposite sides of a disc, so that separate bands of material, such as seed and dry fertiliser, can be deposited in the soil simultaneously without the two bands coming into contact with one another. This is an important feature since contact between these two materials in the soil often results in the fertiliser having a toxic effect on the seed.

These types of devices in their present form however, have several problems.

The forces on a disc as it is drawn through soil are many and of varying strength. The disc reacts to these forces, typically by deformation of its shape, which can generally be described as bending and flexing.

To aid description of the various motions we will define two orthogonal axes in the plane of the surface of the (normally flat) disc as the vertical and horizontal -longitudinal axes. The axis of the axle on which the disc is mounted will be referred to as the horizontal - traverse axis and is orthogonal (points directly out from) the plane of the surface of the disc in its normal undeformed state on the axle.

The leading edge of the blade is typically oriented to be in contact with the surface of the disc in front of the axle (that is, ahead of the axle in the direction of travel of the disc) and typically substantially below the horizontal axis.

In this arrangement when the disc flexes about the vertical axis it has the effect of bending the surface of the disc, either away from or toward the leading edge of the blade substantially along its entire length. In contrast, when the disc flexes about the horizontal axis the surface of the disc above the horizontal axis moves in a different direction (toward or away) from the surface below the horizontal axis along the leading edge of the blade. Of course, more complex movements can occur due to combinations of these two basic movements.

In prior art arrangements the blade is typically pivotally mounted to pivot about a substantially vertical or substantially horizontal axis. However, there can be problems with both of these arrangements.

Typically a blade mounted to pivot about a substantially vertical axis of rotation has the axis of rotation of the blade located at or in the vicinity of the rear edge of the blade. This arrangement ensures that there are few impediments to the leading edge of the blade moving progressively inwards towards the disc as the disc flexes about a vertical axis, or to compensate for wear between it and the disc.

However a disadvantage of this arrangement is that it does not allow the blade to pivot horizontally to follow sideways flexing of the disc. The result is that the blade is subjected to a twisting force and can break, particularly if it is constructed from brittle high-wear-resistant material. This can increase operation costs both in the cost of a replacement blade and in the down time while the blade is replaced.

Constructing the blade from softer, more flexible material to prevent breakage has the disadvantage that the blade may then wear too rapidly for this option to be a viable alternative.

An alternative arrangement is to configure the blade such that the axis of rotation of the blade is located at the top edge (relative to the ground) of the blade and is substantially longitudinal and horizontal in orientation. In this configuration even a brittle blade will not break when the disc flexes sideways. But ensuring that the blade is free to rotate (within limits) about a substantially-horizontal axis while at the same time always making intimate and accurate contact with the vertical face of the disc throughout its entire vertical length (even when the disc is flexing sideways) demands a high level of manufacturing precision that can increase the cost of the blade.

Further, as this pivot arrangement wears (as is inevitable during normal operation) this level of precision-location deteriorates and is expensive to restore.

A further disadvantage of use of either of the above vertical or horizontal pivot mounts in the field is that, over time, the rigid axis arrangements often become packed with dust which can reduce the ability of the blade to pivot effectively and can make it difficult to remove the blade, for example when it has become worn and requires replacing, as is normal in field operation.

It is an object of the present invention to address the foregoing problems or at least to provide the public with a useful choice.

All references, including any patents or patent applications cited in this specification are hereby incorporated by reference. No admission is made that any reference constitutes prior art. The discussion of the references states what their authors assert, and the applicants reserve the right to challenge the accuracy and pertinency of the cited documents. It will be clearly understood that, although a number of prior art publications are referred to herein, this reference does not constitute an admission that any of these documents form part of the common general knowledge in the art, in New Zealand or in any other country.

Throughout this specification, the word "comprise", or variations thereof such as "comprises" or "comprising", will be understood to imply the inclusion of a stated element, integer or step, or group of elements integers or steps, but not the exclusion of any other element, integer or step, or group of elements, integers or steps.

Further aspects and advantages of the present invention will become apparent from the ensuing description which is given by way of example only.

### DISCLOSURE OF THE INVENTION

According to one aspect of the present invention there is provided a mounting assembly for holding a blade relative to a surface of a disc for a soil engaging apparatus, including:
a first blade mount; and
a blade;
wherein the blade is mounted on the first blade mount such that the blade can move at least partially along the first blade mount and can tilt with respect to an axis of the first blade mount.

According to another aspect of the present invention there is provided a blade mounting assembly for use with a disc for a soil engaging apparatus substantially as described above, wherein the blade has at least a first aperture and the first blade mount is configured to fit into the first aperture without contacting the blade.

Preferably the soil engaging apparatus is a no-tillage seed sowing apparatus.

No-tillage seed sowing is a term used to describe the technique of forming a slot in untilled soil into which seed and other materials can be inserted. Typically the slot is formed by a disc mounted on an axle so that, in use, the disc rotates in a vertical plane about a horizontal axis (the axis of the axle) while partly embedded in the soil, and is drawn in a forward direction with its axle substantially parallel to the soil surface and perpendicular to the direction of travel.

A no-tillage seed sowing apparatus typically includes one or more side blades. Each side blade has a leading edge which is typically straight in the vertical-longitudinal plane (i.e. the plane of the surface of the disc) and has an inclined outer surface to deflect material away from the disc.

In a preferred embodiment substantially the entire length of a leading edge of the blade is held in contact with the surface of the disc.

One advantage of this arrangement is that the entire length of the leading edge can scrape material away from the surface of the disc, thus reducing fouling of the disc surface. However, in practice there may be deformations of the disc which result in the surface of the disc becoming curved in such a way that it is not possible for a rigid body to retain contact along its entire length.

In order to hold the leading edge of the blade against the surface of the disc as it flexes the blade needs to be mounted so that it can move with the flexing surface; that is towards and away from the plane of the disc (for example flexure about the vertical axis) as well as following any angulation of the disc surface (for example flexure about the horizontal longitudinal axis).

A key feature of the present mounting assembly is that the blade is mounted to the first blade mount in such a manner that the blade may be able to move with the surface of the disc as it moves and flexes, thus maintaining contact of the leading edge of the blade with the disc. This may be achieved by mounting the blade loosely on a first blade mount member so that the blade may move towards and away from the plane of the disc, and to tilt. This arrangement may enable the blade to move along the first blade mount and to tilt or rock in any direction about the longitudinal axis of the first blade mount. The amount of movement is determined by the looseness of the fitting (i.e. the gap between the outer surface of the blade mount and the inner surface of the aperture of the blade). Both the amount of movement along the first blade mount and the amount of tilt may be determined by the gap between the first blade mount and the side of the aperture in the blade. As the first blade mount and the aperture may be configured in any desired shape, it is possible to choose a shape that may allow greater movement in some directions than in others.

In a preferred embodiment the first blade mount includes a first peg.

Reference to a peg throughout this specification should be understood to refer to any relatively short, rigid member, such as (without limitation) a cylindrical or tapered rod or pin. A peg according to the present invention is preferably a short cylindrical rod formed from metal. However, those skilled in the art will appreciate that a blade mount which can be inserted into an aperture in the blade without touching the blade may be of any convenient shape or form and that reference to a blade mount as a peg should not be seen as limiting.

A blade mounting assembly according to the present invention may include a peg and a blade having an aperture where a width of the aperture is greater than a width of the peg. With this arrangement the blade may be tilted on the peg, where the possible inclination of the blade backwards and forwards relative to a longitudinal axis of the peg is limited by the difference in the width of the aperture relative to the width of the peg.

The aperture in the blade may be formed in any convenient shape. For example it may be configured as an oval or an elongated slot. An oval or elongated slot may be preferable to a single circular aperture in order to resist rotational movement of the blade about an imaginary axis through the aperture. However, a circular aperture is relatively easy and cost effective to form and may be preferred for these reasons.

Preferably the blade may be loosely fitted on the blade mount at a location near the top front corner of the blade, i.e. the part of the blade that, in use, is pointing in the direction of travel of the disc and is distal to the ground. This arrangement may provide a greater degree of movement of the blade on the peg than a similar mounting further back (or lower) on the blade.

Preferably the difference between a radial width of the first blade mount and a radial width of the first aperture in the blade is in the range 0.5 mm to 10 mm.

A radial width of the first blade mount should be understood to mean a width of the first blade mount in the plane of the blade; in other words a width of the part of the first blade mount that is located within the aperture in the blade when the mounting assembly is assembled. As will be clear from the description above, the radial width of the first blade mount, at least up to the point where it is clear of the blade, must be less that a width of the aperture so that the first blade mount can be inserted into the aperture without contacting the blade.

Likewise, a radial width of the aperture in the blade refers to a dimension across the aperture in the plane of the blade.

The applicant has found that, for a typical blade as used in no-tillage seed sowing, there is a maximum difference of these widths, namely 10 mm, beyond which the mounting of the blade is too loose, which may result in the blade losing contact with the surface of the disc as it flexes and moves.

In a similar manner the applicant has found that, typically, a minimum difference between the widths of the first blade mount and the aperture, namely 0.5 mm, is required to enable sufficient movement of the blade on the first blade mount for the blade to effectively remain in contact with the disc surface as the disc moves and flexes.

In preferred embodiments the difference between a radial width of the first blade mount and a radial width of the aperture in the blade is in the range 1.5 mm to 2 mm.

In a preferred embodiment the mounting assembly includes a support member configured to be mounted to the soil engaging apparatus in a location adjacent the surface of the disc.

Reference to a support member throughout this specification should be understood to refer to a rigid member used to support another part (or other parts) of the mounting assembly.

In typical arrangements the support member is mounted to an axle or frame of the seed sowing apparatus so that the support member is adjacent the surface of the disc.

In a preferred embodiment the first blade mount extends from the support structure.

In a preferred embodiment the support structure and first blade mount are oriented such that, when the support structure is attached to a frame of the soil engaging apparatus, the first blade mount is oriented substantially orthogonally to the surface of the disc. This orientation may be advantageous as movement of the blade along the peg of the first blade mount may bring the leading edge of the blade into contact with the disc in its normal position. Furthermore, the blade may tilt about any location along the peg, which may enable the leading edge to follow any deformation of the disc that results from the surface of the disc moving about the vertical axis. Another significant advantage may be to compensate for wear to the leading edge of the disc by moving the blade towards the surface of the disc as the edge wears, which may increase the usable time before maintenance is required and hence reduce costs.

In a preferred embodiment the blade mount is attached to the support member. Preferably the blade mount is releasably attached to the support member so that it may be readily replaced if/when necessary.

A peg may be releasably attached to the support member in a number of ways such as a "push fit" - i.e. by pushing the peg into a complementary cavity in the support member, the fit being such that the peg may be gripped and pulled out of the cavity at a later time if required.

In a preferred embodiment the first blade mount is screwed into the support member.

The peg of the first blade mount that locates the aperture is easily formed and replaced when it wears. While the aperture in the blade may wear, it is automatically replaced each time a blade becomes unserviceable through abrasion by soil on its soil-engaging parts. The peg remains in place until its repetitive contact with numerous replacement blades eventually causes it to wear too, in which case it is easily screwed out and a replacement peg screwed in. An advantage of screwing the first blade mount into the support member is that it may result in a more secure attachment than provided by a push fit, while still being reasonably easy to remove and replace when required.

In a preferred embodiment the end of the peg distal to the attachment to the support member is not attached to any other part of the mounting assembly. The end of the peg that is not attached to any other member of the mounting assembly will be referred to as the free end.

In a preferred embodiment the mounting assembly includes a retainer.

A retainer according to the present invention may be any body configured or arranged to prevent a blade from moving off the free end of the first blade mount.

A retainer may be a head on the free end of the peg, the head configured with a shape and size that cannot fit through the aperture in the blade (for example, this may be used when the peg is screwed into the support member through the aperture in the blade). Similarly a retainer may be a sufficiently large washer fitted to the free end of the peg and prevented from coming off the free end of the peg by a pin inserted radially through the peg.

In a preferred embodiment the retainer is a cover plate.

A cover plate should be understood to be a plate configured to releasably attach to the frame of the seed sowing apparatus, and located such that the clearance between the free end of the peg and a surface of the cover plate is too small to enable the blade to come off the peg.

The preferred embodiment described above has the first blade mount releasably attached to the support member. However, those skilled in the art will appreciate that other embodiments may have the blade mount attached (releasably or otherwise) to the retainer.

In this embodiment the blade is located on the first blade mount and sandwiched between the support member and the retainer so that inward movement of the blade along the first blade mount is limited by the support member while the retainer limits its outward movement.

In a preferred embodiment the mount includes a biasing member configured to bias the blade such that a leading edge of the blade contacts the disc surface.

In a preferred embodiment the biasing member is a pad of resilient material.

However, in other embodiments the biasing member may be any resilient body configured to urge the blade onto the surface of the disc, such as a spring.

A key function of the biasing member is to hold the blade against the surface of the disc even when the disc is not in the soil. When the disc is in use in the ground the blade may be held against the surface of the disc by a combination of self-adjusting lateral soil forces and the biasing member. However, in the absence of the soil forces, as when the disc is not in the ground, the biasing member may keep the blade against the disc surface. This is important as it may enable the blade to deflect surface residue away from the disc, for example immediately prior to the disc entering the soil.

According to another aspect of the present invention there is provided a blade mounting assembly for use with a disc for a soil engaging apparatus substantially as described above, wherein the mounting assembly includes a second blade mount.

A second blade mount, typically located towards the rear top corner of the blade, may assist with maintaining the general orientation of the blade relative to the disc. Those skilled in the art will appreciate that a blade mounted loosely to a single blade mount as described above requires a second blade mount to prevent the blade from rotating freely about the first blade mount. However, it is a key feature of the present invention that the mounting of the blade to the second blade mount must be arranged to maintain the benefits of the movement provided by the aperture and first blade mount. Essentially this may be achieved by arranging the second blade mount so that it allows the blade to pivot while restricting (although not necessarily preventing) other movement of the blade.

In a preferred embodiment the second blade mount includes at least a partial ball and at least a partial socket configured to engage the ball.

In a preferred embodiment the at least partial socket is formed in the support member.

In a preferred embodiment the at least partial ball is formed on the end of the blade distal to the leading edge of the blade.

However, it will be appreciated that the socket could be attached to or formed in the blade and the partial ball attached to or formed in the support member to provide the ball and socket joint.

In a preferred embodiment the at least partial socket is a truncated spherical socket.

One advantage of a second blade mount including a partial socket in the form of a truncated spherical socket is that the socket may be formed in the blade mount by relatively inexpensive sand casting without the need for an expensive core in the casting process.

In a preferred embodiment the second blade mount includes a partial ball having a surface complementary to the surface of the partial socket.

Preferably the ball and socket blade mount is located in the vicinity of a rear top corner of the blade. This arrangement may provide a reliable mounting for the blade when used in conjunction with a first blade mount (as described above) located in the vicinity of a front top corner of the blade. However, those skilled in the art will appreciate that other arrangements of the first and second blade mounts with regard to the blade are possible, and indeed that the first blade mount could be towards the rear of the blade and the second blade mount towards the front.

In a preferred embodiment the partial ball on the blade is rotationally fitted into the partial socket in the second blade mount, the combination held in place by a retainer. Preferably the retainer is the same as used to limit outward movement of the blade on the first blade mount. However, in some embodiments a separate retainer may be used.

With this arrangement the blade may rotate about the centre point of the partial ball and partial socket joint but may not move forwards, backwards, upwards, downwards, inwards or outwards relative to the blade mount. The amount of rotational movement of the ball-and-socket joint is limited by the amount of movement permitted by the fit of the blade aperture on the first blade mount.

Inward movement of the blade at the rear end (i.e. the distal end to the leading edge of the blade) is limited by the ball on the blade being seated within the socket in the second blade mount. The ball and socket joint is arranged so that the rear end of the blade is held in a position away from the surface of the disc, thus creating a channel through which material, such as seed or fertiliser, can travel down into the slot formed in the soil. The movement of the blade towards and away from the disc surface is severely limited by the socket and retainer at this point; however the blade can still tilt and rotate as a consequence of the rotational freedom provided by the ball-and- -socket joint.

The ball/blade may be replaced when the blade becomes unserviceable, for example through abrasion by soil on its soil-engaging parts. The applicant has found that wear on the partial socket in the second blade mount is usually negligible.

In another preferred embodiment the blade includes a second aperture and the second blade mount includes a second peg configured to fit into the second aperture.

This arrangement is similar in concept to the peg and aperture arrangement described above for the first blade mount. However, in practice the preferred amount of movement of the blade at the second blade mount is significantly restricted in one direction compared with that allowed at the first blade mount.

Preferably the difference between a radial width of the second blade mount and a radial width of the second aperture in the blade is the same as for the radial width of the first blade mount and a radial width of the first aperture in the blade, i.e. in the range 0.5 mm to 10 mm. Preferably while there is allowed movement of the blade along the second blade mount in an outward direction, movement in an inward direction (towards the support member/disc) is restricted.

In a preferred embodiment the mounting assembly includes a stop configured to limit the movement of the blade along the second blade mount towards the disc.

A stop may be any device that forms an obstacle preventing the blade from further movement passed the stop. The stop is generally located near the second blade mount at the rear of the blade (i.e. the end distal to the leading edge of the blade) the stop being used to substantially prevent inward movement of the blade along the second blade mount at the contact point of the stop and blade.

Preferably the stop is configured to stop movement of the blade along the second blade mount at a distance of at least 12mm from the surface of the disc.

In this arrangement the blade may still tilt as a consequence of the gap between the blade mount and the aperture in the blade, and may have limited travel along the peg (and from side to side and up and down) of the second blade mount. This embodiment may allow similar angular movement of the blade to that provided by the ball and partial socket described above while still enabling some movement along the peg of the second blade mount (and from side to side and up and down). Furthermore, with use of a suitable stop the blade may be held in position away from the surface of the disc by being sandwiched between the stop and the retainer. Preferably this is arranged so that the rear end of the blade is held in a position away from the surface of the disc, thus creating a channel through which material, such as seed or fertiliser, can travel down into the slot formed in the soil.

According to another aspect of the present invention there is provided a method of mounting a blade to a mounting assembly for holding the blade relative to a surface of a disc for a soil engaging apparatus substantially as described above, wherein the mounting assembly includes a support member configured for attachment to the soil engaging apparatus, a first blade mount configured to fit into an aperture in the blade without contacting the blade, and a retainer including the steps of:
a) attaching the first blade mount to the support member;
b) inserting the first blade mount through the aperture in the blade; and
c) fixing the retainer to the support member to prevent the blade from moving off of the first blade mount.

Those skilled in the art will appreciate that there may be several ways of locating the blade on the first blade mount so that it is not necessary that steps a) and b) above need be carried out sequentially. For example, in some instances it may be convenient to insert the first blade mount through the aperture in the blade before attaching it to the support member.

According to another aspect of the present invention there is provided a method substantially as described above, including the step of:
d) attaching the blade to a second blade mount prior to the step of fixing the retainer to the support member.

According to another aspect of the present invention there is provided a method substantially as described above wherein the second blade mount includes at least a partial ball and at least a partial socket configured to engage with the at least partial ball and wherein the step of attaching the blade to the second blade mount includes engaging the at least partial ball in the at least partial socket.

According to another aspect of the present invention there is provided a method substantially as described above wherein the blade includes a second aperture and the second blade mount includes a peg, wherein the step of attaching the blade to the second blade mount includes inserting the peg into the second aperture.

According to another aspect of the present invention there is provided a method substantially as described above including the step of connecting a biasing member between the blade and either the retainer or the support member, wherein the biasing member is configured to bias the leading edge of the blade against a surface of the disc.

A mounting assembly according to the present invention may provide a number of advantages over prior art assemblies, including:
- Improvement in scraping of soil and surface residue, stubble etc, away from the disc thus reducing stoppage time to clear blockage. This is achieved by the greater degree of freedom of the blade to follow the flexing of the disc as it moves through the soil. Less stoppage time may increase efficiency and reduce operating costs.
- Increased operational lifetime of the blades as they are less likely to encounter forces causing breakage, such as can arise in prior art mounts which do not allow the blade to follow the motion of the disc surface. This may reduce costs as the time between maintenance to replace the blades may be increased as well as fewer blades being required over a given period of time.
- Less expensive blades may be used as they may be formed without the high precision tooling required for blades mounted in conventional mounting assemblies. Cost may also be reduced through the use of relatively brittle but hard wearing materials to form the blade, thus extending the operational lifetime of the blade, the use of these materials being made possible through the reduction in destructive forces on the blade when using a mounting of the present invention in comparison with conventional mounting assemblies.

- Less stoppages due to adjustment of the blade assembly in relation to the disc as a blade mounting assembly of the present invention is constantly self adjusting. This may save down time due to fewer stoppages as well as being more convenient for an operator of the seed sowing apparatus.
- Reduction in stoppage time required to replace a worn blade as a consequence of the simplicity of the mounting assembly of the present invention.
- Reduction in operating and maintenance costs as many of these actions may be carried out relatively quickly and by an operator without specialist tools or skills, thus enabling lower cost labour to be used.
- Extending the usefulness of the no-tilage process to high-residue environments due to improvements in removal of residue from the disc using a blade and blade mount according to the present invention.

### BRIEF DESCRIPTION OF THE DRAWINGS

Further aspects of the present invention will become apparent from the following description which is given by way of example only and with reference to the accompanying drawings in which:
- Figure 1: shows a schematic cut-away plan view through a mounting assembly according to one embodiment of the present invention;
- Figure 2: shows a schematic side elevation of part of a mounting assembly according to the embodiment shown in figure 1;
- Figure 3: shows a schematic cut-away plan view through a mounting assembly according to another embodiment of the present invention; and
- Figure 4: shows a schematic side elevation of part of a mounting assembly according to the embodiment shown in figure 3.

### BEST MODES FOR CARRYING OUT THE INVENTION

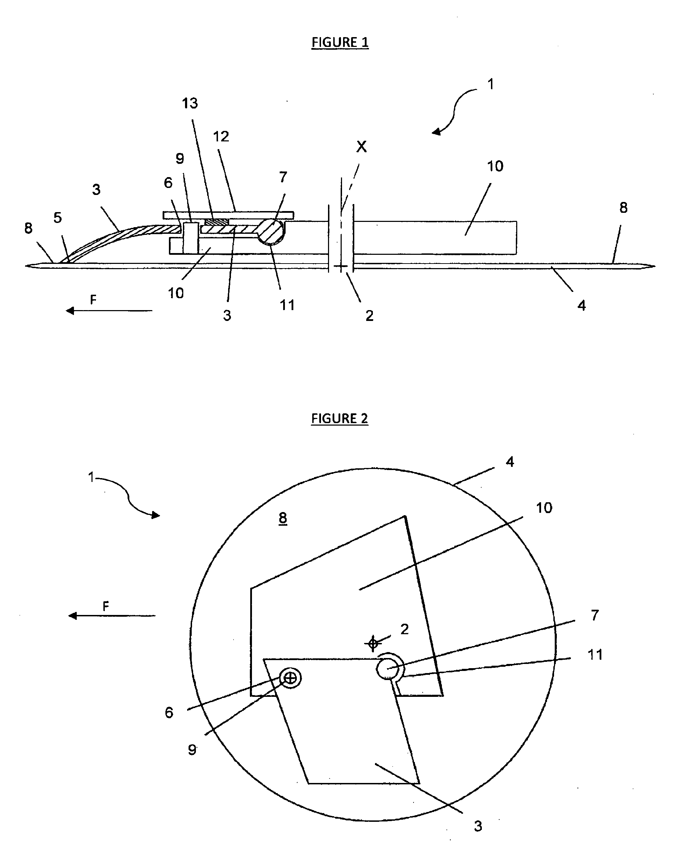

A mounting assembly for a blade for a soil-engaging apparatus according to one embodiment of the present invention is generally indicated by arrow **1** in figures 1 and 2. The soil-engaging apparatus is of the type that may be used with a no-tillage seed sowing apparatus. Figure 1 is a schematic plan view of the mounting assembly shown in cross section through an axle **2** (having an axis X) of the seed sowing apparatus. Figure 2 shows a side view of the mounting assembly (with the retainer removed for clarity).

The mounting assembly **1** is configured to hold a blade **3** relative to a disc **4** which is mounted on the axle **2** of the seed sowing apparatus.

The blade **3** has a leading edge **5** which is typically straight in the vertical-longitudinal plane (ie the plane of the surface of the disc **4)** and has an inclined curvilinear outer surface to deflect material away from the disc. The blade **3** includes a circular aperture **6** of diameter 17.5 mm and at least a partial ball **7** of diameter 16 mm located at the end of the blade distal to the leading edge **5.** It will be appreciated that the partial ball includes at least part of a spherical surface and it is the diameter of that sphere which is referred to above.

The disc **4** used in no tillage seed sowing is typically a thin flat circular disc having a disc surface **8.** The mounting assembly of the present invention is configured to hold the leading edge **5** of the blade **3** in contact with the surface **8** of the disc as the disc moves and flexes during normal use as it is drawn through soil and stubble etc.

The mounting assembly **1** includes two blade mounts, a first blade mount and a second blade mount, the first blade mount being located towards the front (in the direction indicated by the arrow **F** in Figure 1, which also indicates the direction of travel of the disc through the ground) and the second blade mount being located towards the rear of the mounting assembly.

The first blade mount is in the form of a steel 16 mm diameter peg **9.** In other embodiments the peg may be formed from any other suitable material having sufficient rigidity to resist bending when the blade pushes against the peg due to forces exerted on the blade from soil, and hard enough to limit rapid wearing of the peg, so that the peg need only be replaced after several blade changes.

The peg **9** includes a threaded end which is screwed into a complementarily threaded aperture in a steel support member **10** so that the longitudinal axis of the peg is substantially parallel with the axis X of the axle **2.** In other embodiments the peg may be push fit into a cavity in the support member.

When assembled on the seed sowing apparatus, as shown in figure 1, the support **member 10,** which is attached to the axle **2,** is adjacent to but not touching the surface **8** of the disc **4.** The peg **9** extends away from the support member **10** and the disc surface **8,** and is oriented to be substantially orthogonal to the disc surface **8** (i.e. substantially parallel to the axis **X).**

The second blade mount is in the form of the partial ball **7** formed at the rear of the blade and a partial socket **11.** The partial socket **11** is in the form of a truncated spherical cavity formed during casting of the support member **10** (or machined into the support member). The cavity is formed toward the rear of the support member in a location matching the position of the partial ball on the blade when the blade is mounted on the peg **9** of the first blade mount. The surface of the cavity is complementary to the outer surface of the partial ball **7** so as to make a ball and socket joint when assembled.

A retainer, in the form of a retainer plate **12,** is used to prevent the blade **3** from moving off the **peg 9** and the ball **7** from moving out of the socket **11.** The retainer plate is formed from any suitable rigid material and is releasably attached (attachment mechanism not shown) to the frame of the no - tillage seed sowing apparatus.

The blade **3** is urged against the surface **8** of the disc **4** by a biasing member in the form of a pad **13** of resilient material such as rubber. In some embodiments the biasing member may be a spring.

In this embodiment the relatively loose fitting of the aperture **6** around the peg **9** may enable limited movement of the blade along the peg, as well as up and down and side to side, and may also allow the blade to tilt with respect to the peg (or equivalently the surface **8** of the disc). On the other hand the ball **11** and socket **7** joint that make up the second blade mount allows the blade to pivot, but does not allow any translational movement of the blade at the ball and socket joint. The applicant has found that this arrangement may provide sufficient freedom of movement of the blade for the leading edge of the blade, aided by the biasing due to the resilient pad **13,** to be held against the surface **8** of the disc. Furthermore, this arrangement has been found to work reliably in field trials and to provide a relatively maintenance free operation of the mounting assembly.

The mounting assembly may be assembled by first mounting the support member **10** onto the axle **2** of the no-tillage seed sowing apparatus. The peg **9** is screwed into the threaded aperture in the support member. The blade **3** is then placed on the support member so that the peg **9** is fitted through the aperture **6** and the partial ball **7** is engaged in the partial socket **11.** The retainer plate **12** is then secured to the support member so that it fits close to (or over) the end of the peg **9** and the outer surface of the ball **7** with the resilient rubber pad **13** bearing against the blade.

Removal of the blade, as may be required from time to time for cleaning or replacement, is simply done be releasing the retainer plate and removing the blade.

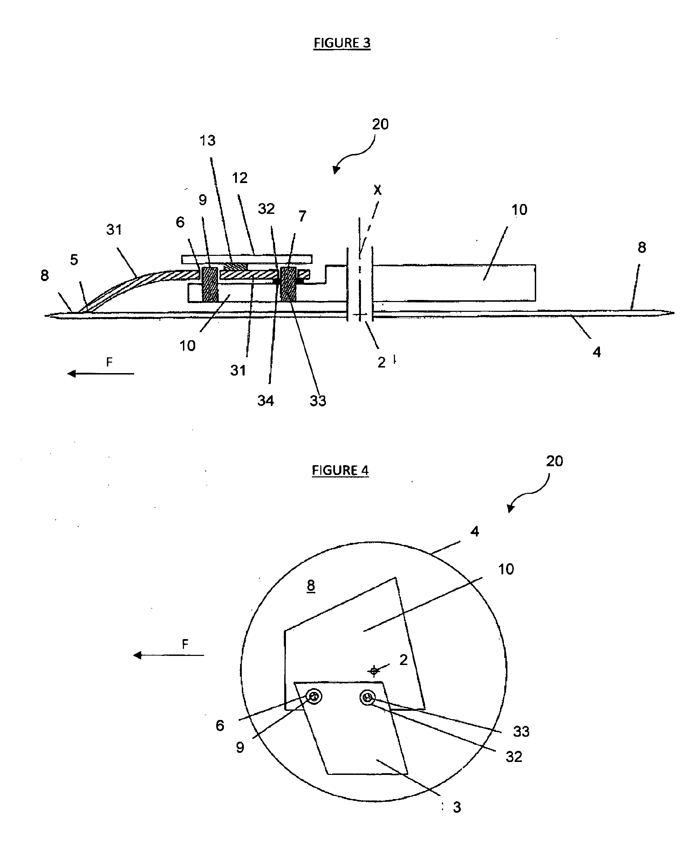

A second embodiment of a mounting assembly according to the present invention is generally indicated by arrow **20** in Figures 3 and 4. These figures show similar views to those of Figures 1 and 2 respectively for the first (above) embodiment.

In the second embodiment the mounting assembly is similar to that of the first embodiment (shown in Figures **1** and 2) except that the blade **31** includes a second aperture **32** and the second blade mount is in the form of a second peg **33** which is screwed into a threaded aperture in the support member **10.** This aperture and peg arrangement replaces the ball and socket joint used for the second blade mount in the first embodiment. Other features which are common to both embodiments are denoted in Figures 3 and 4 by the same numerals as in Figures 1 and 2.

The second blade mount, peg **33** and aperture **32,** operates in a similar manner to the first blade mount (peg **6** and aperture **9)** as described above. The second peg is similar to the peg **9** of the first blade mount, having a diameter of 16 mm and the diameter of the second aperture **32** is 17.5 mm so that the amount of movement at the second blade mount is the same as that provided by the first blade mount.

The amount of movement of the blade along the peg **33** is limited by a stop in the form of an annular steel ring **34,** having a thickness of 14 mm, mounted around the peg **33** between the blade **31** and the support member **10.**

The use of a peg and aperture for the second blade mount may allow a similar degree of movement at the first peg **9** (up, down, and tilt about the first peg) as the ball and socket joint of the first embodiment. However, the additional (albeit limited) movement outward (away from the surface of the disc) along the second peg **33** may provide some additional flexibility to the mounting assembly of the second embodiment as such movement is not available in the ball and socket joint of the first embodiment.

The mounting assembly of this embodiment is assembled in a similar manner to that described above for the first embodiment except that the blade is located on the support member **10** by inserting the pegs **9** and **33** through the apertures **6** and **32** of the blade **31** respectively. Disassembly again simply requires removal of the retainer plate and the blade slid off of the pegs **9,** and **33.**

Aspects of the present invention have been described by way of example only and it should be appreciated that modifications and additions may be made thereto without departing from the scope thereof as defined in the appended claims.

## Claims

1. A mounting assembly (1, 20) for holding a blade (3, 31) relative to a surface (8) of a disc (4) for a soil engaging apparatus, including:
a first blade mount (9);
a blade (3, 31) including a first aperture (6); and
a support member (10) configured to be mounted to the soil engaging apparatus in a location adjacent the surface (8) of the disc (4) of the soil engaging apparatus,
**characterised in that** the first blade mount (9) is attached to the support member (10) and wherein the support member (10) and the first blade mount (9) are oriented such that, when the support member (10) is attached to a frame of the soil engaging apparatus, the first blade mount (9) is oriented substantially orthogonally to the surface (8) of the disc (4) of the soil engaging apparatus and wherein the first blade mount (9) is configured to fit into the first aperture (6) without contacting the blade (3, 31), such that the blade (3, 31) can move at least partially along the first blade mount (9) and can tilt about an axis of the first blade mount (9).

2. A mounting assembly (1, 20) as claimed in claim 1 wherein the first aperture (6) has a circular circumference and the first blade mount (9) is a first peg.

3. A mounting assembly (1, 20) as claimed in either one of claim 1 or 2 wherein the difference between a radial width of the first blade mount (9) and a radial width of the first aperture (6) in the blade (3, 31) is in the range from 0.5 mm to 10 mm.

4. A mounting assembly (1, 20) as claimed in any one of claims 1 to 3 wherein the end of the first blade mount (9) distal to the attachment to the support member (10) is not attached to any other part of the mounting assembly.

5. A mounting assembly (1, 20) as claimed in any one of claims 1 to 4 including a retainer (12) configured to prevent the blade (3, 31) from moving off the first blade mount (9).

6. A mounting assembly (1, 20) as claimed in any one of claims 1 to 5 including a biasing member (13) configured to bias the blade (3, 31) such that a leading edge (5) of the blade (3, 31) contacts the disc surface (8).

7. A mounting assembly (1, 20) as claimed in claim 6 wherein the biasing member (13) includes a spring or a pad of resilient material.

8. A mounting assembly (1, 20) as claimed in any one of claims 1 to 7 including a second blade mount (7, 11, 32, 33).

9. A mounting assembly (1, 20) as claimed in claim 8 wherein the second blade mount includes at least a partial ball (7) and at least a partial socket (11) configured to engage the ball (7).

10. A mounting assembly (1, 20) as claimed in claim 9 wherein the at least a partial socket (11) is formed in a support member (10) and the at least a partial ball (7) is formed on the end of the blade (31) distal to a leading edge (5) of the blade (31).

11. A mounting assembly (1, 20) as claimed in claim 8 wherein the second blade mount ncludes a second peg (33) configured to fit into a second aperture (32) in the blade (31) without contacting the blade (31), wherein the difference between a radial width of the second blade mount (33) and a radial width of the second aperture (32) in the blade is in the range 0.5 mm to 10 mm.

12. A method of mounting a blade (3, 31) to a mounting assembly (1, 20) for holding the blade (3, 31) relative to a surface (8) of a disc (4) for a soil engaging apparatus, wherein the mounting assembly (1, 20) includes a first blade mount (9) configured to fit into an aperture (6) in the blade (3, 31) without contacting the blade, such that the blade (3, 31) can move at least partially along the first blade mount (9) and can tilt about an axis of the first blade mount (9), the method including the steps of;
a) attaching the first blade mount (9) to a support member (10) attached to a frame of the soil engaging apparatus in a location adjacent the surface (8) of the disc (4) of the soil engaging apparatus wherein the support member (10) and the first blade mount (9) are oriented such that the first blade mount (9) is oriented substantially orthogonally to the surface (8) of the disc (4) of the soil engaging apparatus;
b) inserting the first blade mount (9) through the aperture (6) in the blade (3, 31);
c) fixing a retainer (12) to the support member (10) to prevent the blade (3, 31) from moving off of the first blade mount (9) and
d) attaching the blade (3, 31) to a second blade mount (7, 11, 33) prior to the step of fixing the retainer (12) to the support member (10).

13. A method as claimed in claim 12 wherein the second blade mount includes at least a partial ball (7) and at least a partial socket (11) configured to engage with the at least a partial ball (7) and wherein the step of attaching the blade (3) to the second blade mount includes engaging the at least partial ball (7) in the at least partial socket (11).

14. A method as claimed in claim 12 wherein the blade (31) includes a second aperture (32) and the second blade mount includes a second peg (33), wherein the step of attaching the blade (31) to the second blade mount includes inserting the second peg (33) into the second aperture (32).

15. A method as claimed in any one of claims 12 to 14 including the step of connecting a biasing member (13) between the blade (3, 31) and either the retainer (12) or a support member (10), wherein the biasing member (13) is configured to bias a leading edge (5) of the blade (3, 31) against a surface (8) of the disc (4).

## Patentansprüche

1. Befestigungsanordnung (1, 20) zum Halten einer Klinge (3, 31) relativ zu einer Oberfläche (8) einer Scheibe (4) für ein mit Schmutz in Kontakt kommendes Gerät, einschließend:
eine erste Klingenbefestigung (9);
eine Klinge (3, 31), die einen ersten Durchlass (6) einschließt; und
einen Trägerbestandteil (10), der zum Befestigen an dem mit Schmutz in Kontakt kommenden Gerät an einem Ort benachbart zur Oberfläche (8) der Scheibe (4) des mit Schmutz in Kontakt kommenden Geräts konfiguriert ist,
**dadurch gekennzeichnet, dass** die erste Klingenbefestigung (9) an dem Trägerbestandteil (10) angebracht ist, und wobei der Trägerbestandteil (10) und die erste Klingenbefestigung (9) so orientiert sind, dass, wenn der Trägerbestandteil (10) an einem Rahmen des mit Schmutz in Kontakt kommenden Geräts angebracht ist, die erste Klingenbefestigung (9) im Wesentlichen senkrecht zur Oberfläche (8) der Scheibe (4) des mit Schmutz in Kontakt kommenden Geräts orientiert ist, und wobei die erste Klingenbefestigung (9) so konfiguriert ist, dass sie in den ersten Durchlass (6) passt ohne mit der Klinge (3, 31) in Kontakt zu kommen, so dass sich die Klinge (3, 31) mindestens teilweise entlang der ersten Klingenbefestigung (9) bewegen kann und um eine Achse der ersten Klingenbefestigung (9) schwenken kann.

2. Befestigungsanordnung (1, 20) wie in Anspruch 1 beansprucht, wobei der erste Durchlass (6) einen kreisförmigen Umfang aufweist und die erste Klingenbefestigung (9) ein erster Stift ist.

3. Befestigungsanordnung (1, 20) wie in einem der Ansprüche 1 oder 2 beansprucht, wobei der Unterschied zwischen einer radialen Breite der ersten Klingenbefestigung (9) und einer radialen Breite des ersten Durchlasses (6) in der Klinge (3, 31) im Bereich von 0,5 mm bis 10 mm liegt.

4. Befestigungsanordnung (1, 20) wie in einem der Ansprüche 1 bis 3 beansprucht, wobei das Ende der ersten Klingenbefestigung (9) distal zur Anbringung an dem Trägerbestandteil (10) nicht an irgendeinem Teil der Befestigungsanordnung angebracht ist.

5. Befestigungsanordnung (1, 20) wie in einem der Ansprüche 1 bis 4 beansprucht, einschließend eine Halterung (12), die so konfiguriert ist, dass sie verhindert, dass die Klinge (3, 31) von der ersten Klingenbefestigung (9) abgezogen wird.

6. Befestigungsanordnung (1, 20) wie in einem der Ansprüche 1 bis 5 beansprucht, einschließend einen vorspannenden Bestandteil (13), der so konfiguriert ist, dass er die Klinge (3, 31) unter Vorspannung bringt, so dass eine Vorderkante (5) der Klinge (3, 31) mit der Scheibenoberfläche (8) in Kontakt kommt.

7. Befestigungsanordnung (1, 20) wie in Anspruch 6 beansprucht, wobei der vorspannende Bestandteil (13) eine Feder oder ein Pad aus einem elastischen Material einschließt.

8. Befestigungsanordnung (1, 20) wie in einem der Ansprüche 1 bis 7 beansprucht, einschließend eine zweite Klingenbefestigung (7, 11, 32, 33).

9. Befestigungsanordnung (1, 20) wie in Anspruch 8 beansprucht, wobei die zweite Klingenbefestigung mindestens eine Partialkugel (7) und mindestens eine Partialpfanne (11), die zum Aufnehmen der Kugel (7) konfiguriert ist, einschließt.

10. Befestigungsanordnung (1, 20) wie in Anspruch 9 beansprucht, wobei die mindestens eine Partialpfanne (11) in einem Trägerbestandteil (10) geformt ist und die mindestens eine Partialkugel (7) am Ende der Klinge (31) distal zu einer Vorderkante (5) der Klinge (31) geformt ist.

11. Befestigungsanordnung (1, 20) wie in Anspruch 8 beansprucht, wobei die zweite Klingenbefestigung einen zweiten Stift (33) einschließt, der so konfiguriert ist, dass er in einen zweiten Durchlass (32) in der Klinge (31) passt ohne mit der Klinge (31) in Kontakt zu kommen, wobei der Unterschied zwischen einer radialen Breite der zweiten Klingenbefestigung (33) und einer radialen Breite des zweiten Durchlasses (32) in der Klinge im Bereich von 0,5 mm bis 10 mm liegt.

12. Verfahren zum Befestigen einer Klinge (3, 31) in einer Befestigungsanordnung (1, 20) zum Halten der Klinge (3, 31) relativ zu einer Oberfläche (8) einer Scheibe (4) für ein mit Schmutz in Kontakt kommendes Gerät, wobei die Befestigungsanordnung (1, 20) eine erste Klingenbefestigung (9) einschließt, die so konfiguriert ist, dass sie in einen Durchlass (6) in der Klinge (3, 31) passt ohne mit der Klinge in Kontakt zu kommen, so dass sich die Klinge (3, 31) mindestens teilweise entlang der ersten Klingenbefestigung (9) bewegen kann und um eine Achse der ersten Klingenbefestigung (9) schwenken kann, wobei das Verfahren die folgenden Schritte umfasst:
a) Anbringen der ersten Klingenbefestigung (9) an einem Trägerbestandteil (10), der an einem Rahmen des mit Schmutz in Kontakt kommenden Geräts an einem Ort benachbart zur Oberfläche (8) der Scheibe (4) des mit Schmutz in Kontakt kommenden Geräts angebracht ist, wobei der Trägerbestandteil (10) und die erste Klingenbefestigung (9) so orientiert sind, dass die erste Klingenbefestigung (9) im Wesentlichen senkrecht zur Oberfläche (8) der Scheibe (4) des mit Schmutz in Kontakt kommenden Geräts orientiert ist;
b) Einführen der ersten Klingenbefestigung (9) durch den Durchlass (6) in der Klinge (3, 31);
c) Fixieren einer Halterung (12) an dem Trägerbestandteil (10), um zu verhindern, dass die Klinge (3, 31) von der ersten Klingenbefestigung (9) abgezogen wird, und
d) Anbringen der Klinge (3, 31) an einer zweiten Klingenbefestigung (7, 11, 33) vor dem Schritt von Fixieren der Halterung (12) an dem Trägerbestandteil (10).

13. Verfahren wie in Anspruch 12 beansprucht, wobei die zweite Klingenbefestigung mindestens eine Partialkugel (7) und mindestens eine Partialpfanne (11), die zum Aufnehmen der mindestens einen Partialkugel (7) konfiguriert ist, einschließt, und wobei der Schritt von Anbringen der Klinge (3) an der zweiten Klingenbefestigung Aufnehmen der mindestens einen Partialkugel (7) in der mindestens einen Partialpfanne (11) einschließt.

14. Verfahren wie in Anspruch 12 beansprucht, wobei die Klinge (31) einen zweiten Durchlass (32) einschließt und die zweite Klingenbefestigung einen zweiten Stift (33) einschließt, wobei der Schritt von Anbringen der Klinge (31) an der zweiten Klingenbefestigung Einführen des zweiten Stifts (33) in den zweiten Durchlass (32) einschließt.

15. Verfahren wie in einem der Ansprüche 12 bis 14 beansprucht, einschließend den Schritt von Verbinden eines vorspannenden Bestandteils (13) zwischen der Klinge (3, 31) und entweder der Halterung (12) oder einem Trägerbestandteil (10), wobei der vorspannende Bestandteil (13) zum Vorspannen einer Vorderkante (5) der Klinge (3, 31) gegen eine Oberfläche (8) der Scheibe (4) konfiguriert ist.

## Revendications

1. Ensemble de montage (1, 20) pour maintenir une lame (3, 31) par rapport à une surface (8) d'un disque (4) pour un appareil de contact avec le sol, comprenant :
un premier support de lame (9) ;
une lame (3, 31) comprenant une première ouverture (6) ; et
un élément de support (10) configuré pour être monté sur l'appareil de contact avec le sol, dans un emplacement adjacent à la surface (8) du disque (4) de l'appareil de contact avec le sol,
**caractérisé en ce que** le premier support de lame (9) est fixé sur l'élément de support (10) et dans lequel l'élément de support (10) et le premier support de lame (9) sont orientés de sorte que, lorsque l'élément de support (10) est fixé à un bâti de l'appareil de contact avec le sol, le premier support de lame (9) est orienté sensiblement orthogonalement par rapport à la surface (8) du disque (4) de l'appareil de contact avec le sol et dans lequel le premier support de lame (9) est configuré pour s'adapter dans la première ouverture (6) sans être en contact avec la lame (3, 31), de sorte que la lame (3, 31) peut se déplacer au moins partiellement le long du premier support de lame (9) et peut s'incliner autour d'un axe du premier support de lame (9).

2. Ensemble de montage (1, 20) selon la revendication 1, dans lequel la première ouverture (6) a une circonférence circulaire et le premier support de lame (9) est une première cheville.

3. Ensemble de montage (1, 20) selon l'une des revendications 1 ou 2, dans lequel la différence entre une largeur radiale du premier support de lame (9) et une largeur radiale de la première ouverture (6) dans la lame (3, 31) est dans la plage de 0,5 mm à 10 mm.

4. Ensemble de montage (1, 20) selon l'une quelconque des revendications 1 à 3, dans lequel l'extrémité du premier support de lame (9) à distance de la fixation à l'élément de support (10) n'est pas fixée sur une autre partie de l'ensemble de montage.

5. Ensemble de montage (1, 20) selon l'une quelconque des revendications 1 à 4, comprenant un dispositif de retenue (12) configuré pour empêcher la lame (3, 31) de sortir du premier support de lame (9).

6. Ensemble de montage (1, 20) selon l'une quelconque des revendications 1 à 5, comprenant un élément de sollicitation (13) configuré pour solliciter la lame (3, 31) de sorte qu'un bord d'attaque (5) de la lame (3, 31) est en contact avec la surface de disque (8).

7. Ensemble de montage (1, 20) selon la revendication 6, dans lequel l'élément de sollicitation (13) comprend un ressort ou un coussinet de matériau résilient.

8. Ensemble de montage (1, 20) selon l'une quelconque des revendications 1 à 7, comprenant un second support de lame (7, 11, 32, 33).

9. Ensemble de montage (1, 20) selon la revendication 8, dans lequel le second support de lame comprend au moins une bille partielle (7) et au moins une cavité partielle (11) configurée pour mettre en prise la bille (7).

10. Ensemble de montage (1, 20) selon la revendication 9, dans lequel la au moins une cavité partielle (11) est formée dans un élément de support (10) et la au moins une bille partielle (7) est formée sur l'extrémité de la lame (31) à distance d'un bord d'attaque (5) de la lame (31).

11. Ensemble de montage (1, 20) selon la revendication 8, dans lequel le second support de lame comprend une seconde cheville (33) configurée pour s'adapter dans une seconde ouverture (32) dans la lame (31) sans être en contact avec la lame (31), dans lequel la différence entre une largeur radiale du second support de lame (33) et une largeur radiale de la seconde ouverture (32) dans la lame est dans la plage de 0,5 mm à 10 mm.

12. Procédé pour monter une lame (3, 31) sur un ensemble de montage (1, 20) afin de supporter la lame (3, 31) par rapport à une surface (8) d'un disque (4) pour un appareil de contact avec le sol, dans lequel l'ensemble de montage (1, 20) comprend un premier support de lame (9) configuré pour s'adapter dans une ouverture (6) dans la lame (3, 31) sans être en contact avec la lame, de sorte que la lame (3, 31) peut se déplacer au moins partiellement le long du premier support de lame (9) et peut s'incliner autour d'un axe du premier support de lame (9), le procédé comprenant les étapes consistant à :
a) fixer le premier support de lame (9) sur un élément de support (10) fixé à un bâti de l'appareil de contact avec le sol dans un emplacement adjacent à la surface (8) du disque (4) de l'appareil de contact avec le sol, dans lequel l'élément de support (10) et le premier support de lame (9) sont orientés de sorte que le premier support de lame (9) est orienté sensiblement orthogonalement par rapport à la surface (8) du disque (4) de l'appareil de contact avec le sol ;
b) insérer le premier support de lame (9) à travers l'ouverture (6) dans la lame (3, 31) ;
c) fixer un dispositif de retenue (12) sur l'élément de support (10) pour empêcher la lame (3, 31) de sortir du premier support de lame (9), et
d) fixer la lame (3, 31) sur un second support de lame (7, 11, 33) avant l'étape consistant à fixer le dispositif de retenue (12) sur l'élément de support (10).

13. Procédé selon la revendication 12, dans lequel le second support de lame comprend au moins une bille partielle (7) et au moins une cavité partielle (11) configurée pour se mettre en prise avec la au moins une bille partielle (7) et dans lequel l'étape consistant à fixer la lame (3) sur le second support de lame comprend l'étape consistant à mettre en prise la au moins une bille partielle (7) dans la au moins une cavité partielle (11).

14. Procédé selon la revendication 12, dans lequel la lame (31) comprend une seconde ouverture (32) et le second support de lame comprend une seconde cheville (33), dans lequel l'étape consistant à fixer la lame (31) sur le second support de lame comprend l'étape consistant à insérer la seconde cheville (33) dans la seconde ouverture (32).

15. Procédé selon l'une quelconque des revendications 12 à 14, comprenant l'étape consistant à raccorder un élément de sollicitation (13) entre la lame (3, 31) et le dispositif de retenue (12) ou un élément de support (10), dans lequel l'élément de sollicitation (13) est configuré pour solliciter un bord d'attaque (5) de la lame (3, 31) contre une surface (8) du disque (4).
